Europäisches Patentamt

European Patent Office

Office européen des brevets

(19)

(11) Publication number: **0 119 845**
**B1**

(12)

# EUROPEAN PATENT SPECIFICATION

(45) Date of publication of patent specification: 19.08.87

(51) Int. Cl.⁴: **G 21 C 1/02**

(21) Application number: **84301790.6**

(22) Date of filing: **16.03.84**

(54) Fast breeder reactor.

(30) Priority: **16.03.83 JP 42297/83**

(43) Date of publication of application:
**26.09.84 Bulletin 84/39**

(45) Publication of the grant of the patent:
**19.08.87 Bulletin 87/34**

(84) Designated Contracting States:
**FR GB**

(56) References cited:
**EP-A-0 064 921**
**FR-A-2 036 828**
**FR-A-2 363 865**
**GB-A-2 000 356**
**LU-A- 60 478**

**NUCLEAR ENERGY, vol. 20, no. 1, February
1981, pages 23-30, London, GB; J.A.G.
HOLMES: "Developments in UK commercial
fast reactor design"**

(73) Proprietor: **HITACHI, LTD.**
**6, Kanda Surugadai 4-chome Chiyoda-ku
Tokyo 100 (JP)**

(73) Proprietor: **CENTRAL RESEARCH INSTITUTE OF
ELECTRIC POWER
6-1 Ohtemachi 1-chome
Chiyoda-ku Tokyo (JP)**

(72) Inventor: **Uotani, Masaki
1-16-2-303 Iwatokita
Komae-shi Tokyo (JP)**
Inventor: **Yamanaka, Tsuneyasu
152-1 Higashiishikawa
Katsuta-shi Ibaraki-ken (JP)**
Inventor: **Fukumoto, Wasao
2798-13 Sukegawa-cho
Hitachi-shi Ibaraki-ken (JP)**

(74) Representative: **Paget, Hugh Charles Edward
et al
MEWBURN ELLIS & CO. 2/3 Cursitor Street
London EC4A 1BQ (GB)**

Courier Press, Leamington Spa, England.

## Description

The present invention relates to a fast breeder reactor, and more specifically to a fast breeder reactor in which a reactor core is supported by a core support which in turn is carried by the side wall of the reactor vessel.

A fast breeder reactor of this type has been disclosed in GB—A—1 536 645, which shows a reactor in which low temperature liquid sodium in the lower portion of the reactor vessel passes through the reactor core in heat transfer relationship with the fuel assemblies; on the other hand, other low temperature liquid sodium is passed around the core in a by-pass flow path.

However, in the method according to the prior art, the outlet for the sodium from the reactor vessel is liable to break due to thermal striping at the zone where the high temperature sodium which has passed through the reactor core and the low temperature sodium passed around the core meet. In general, the mechanical strength of a core support decreases as temperature rises.

Proposals have been made to overcome this problem by provision of chambers of cool sodium on the surface of the core support. GB—A—2 000 356 discloses use of a chamber of static sodium, and in LU—A—60478 and flow of sodium through such a chamber is provided.

It is an object of the present invention to provide a fast breeder reactor in which the coolant sodium is more effectively able to keep a core support relatively cold without causing any thermal striping in the reactor vessel.

The present invention is set out in claim 1.

By the invention, means are provided for introducing a flow of low temperature sodium into a sodium chamber located on the upper surface of the core support and further for preventing the flow from becoming convective so as to cool the core support and thereby maintain it at a suitable temperature for preventing or restricting decrease in its mechanical strength. Thermal striping in the reactor vessel is also prevented.

An embodiment of the invention will now be described by way of example with reference to the accompanying drawings, in which:—

Fig. 1 is a sectional view of a fast breeder reactor embodying the present invention;

Fig. 2 shows a system connecting the first sodium chamber and the second sodium chamber in the reactor of Fig. 1;

Fig. 3 shows a system connecting the second sodium chamber and the first sodium chamber in this reactor;

Fig. 4A is a diagram of flow velocity distribution in the sodium layers of the first and second sodium chambers of Figs. 2 and 3 having convection-preventing boards;

Fig. 4B is a diagram of the temperature distribution corresponding to the flow velocity distribution of Fig. 4A;

Fig. 5A is a diagram of flow velocity distribution in the sodium layers of the first and second sodium chambers not having an active cooling system and convection-preventing boards as shown in Figs. 2, 3 and 4; and

Fig. 5B is a diagram of temperature distribution corresponding to the flow velocity distribution of Fig. 5A.

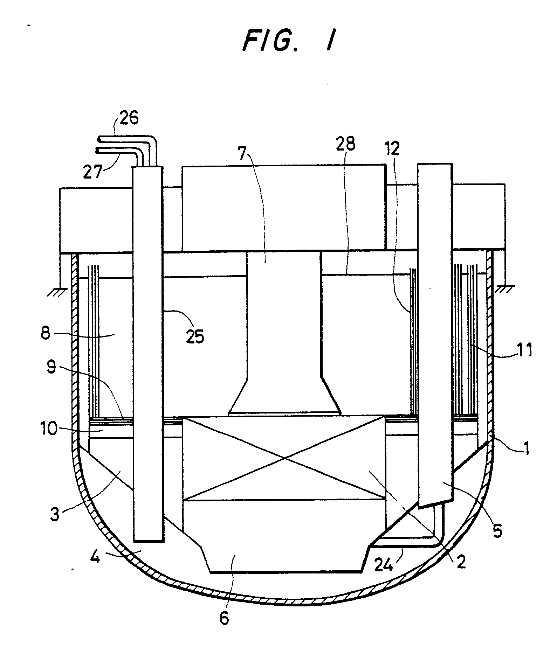

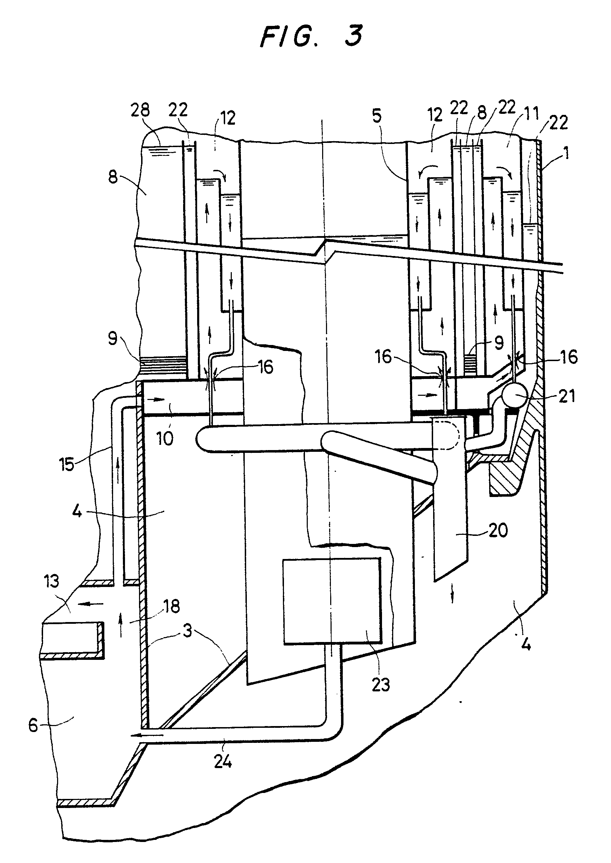

The reactor of Figs. 1 to 4 has a reactor core 2 supported by a core support 3 which itself is supported by the wall of the reactor vessel 1. The first sodium chamber 4 is formed in the lower portion of the reactor vessel 1 and below the reactor core 2. Low temperature sodium in the first sodium chamber 4 is supplied into a high-pressure plenum 6 through a pipe 24 by a pump 23 (Fig. 3). The pump 23 is surrounded by a cylindrical wall 5. The low temperature sodium in the high-pressure plenum 6 is introduced into an intermediate pressure plenum 13 through a throttle 18. The low temperature sodium in the intermediate pressure plenum 13 passes through the reactor core 2 to receive heat from the reactor core 2, then passes through an upper core structure 7 located on the core 2, and reaches a sodium level 28 of the third sodium chamber 8. The laminated thermal insulation boards 9 and the sodium layer in the second sodium chamber 10 insulate thermally the hot plenum (the third sodium chamber 8) and the cold plenum (the first sodium chamber 4).

Coupling pipes 15 are arranged between the core support 3 and fixed shielding members 14 that are arranged along the outermost periphery of the reactor core 2. The sodium in the intermediate-pressure plenum 13 is introduced into the second sodium chamber 10 via the coupling pipes 15. The sodium chamber 10 cools the core support 3, and from it sodium is supplied into a first wall cooling construction 11 and a second wall cooling construction 12 through orifices 16. The first wall cooling construction 11 cools the wall of the reactor vessel 1. The second wall cooling construction 12 cools the wall 5 of the pump 23. The reference number 22 denotes the stagnant sodium layer. The sodium which has cooled the wall of the reactor vessel 1 or the wall 5 of the pump 23 is collected into a header 21, and is drained into the first sodium chamber 4 through the blow-out tubes 20. In order to achieve uniform flow of the sodium into the reactor vessel wall cooling construction 11 and the pump wall cooling construction 12, the pressure of the sodium layer 10 is elevated by the pump 23 and the pressure of the sodium therein is reduced through orifices 16.

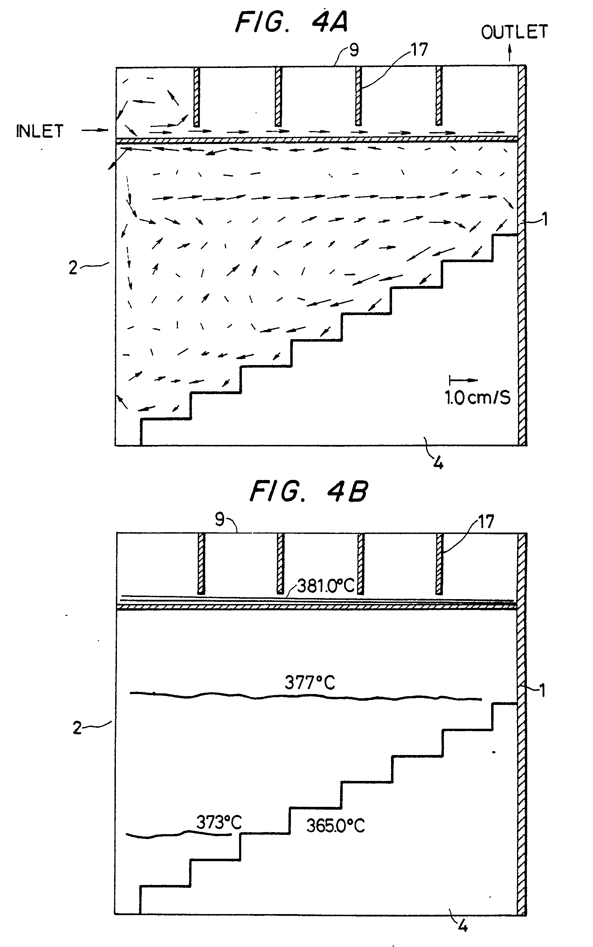

Convection-preventing boards 17 (Fig. 4) are provided in the second sodium chamber 10 so that the sodium therein flows under the lower ends of the boards 17.

The sodium in the third chamber 8 is introduced into the heat exchanger 25. The heat exchanger 25 exchanges heat between the primary system sodium which is introduced thereinto and the secondary system sodium therein. The thermal capacity obtained by the heat exchange is produced through the pipes 26 and 27. The primary system sodium which is reduced in temperature by the heat exchange flows into the first sodium chamber 4.

As a result of our experiments, it has been realised that the sodium temperature in the second sodium chamber 10 should be kept below 427°C to prevent creep rupture of the core support 3, in a case where the diameter of the reactor vessel 1 is 20 m and the height of the second sodium chamber 10 is 0.5 m. If a stagnant layer is present in the second sodium chamber 10 instead of the layer shown in the present invention in which the low temperature sodium is introduced into the second sodium chamber 10 from the first sodium chamber 4 by the pump 23, the sodium temperature in the first sodium chamber 4 must be kept at 350°C and the sodium temperature in the third sodium chamber 8 must be kept at 500°C to prevent the above-mentioned creep rupture of the core support 3. In the present embodiment of the invention, the sodium temperature in the first sodium chamber 4 can be kept at 400°C and the sodium temperature in the third sodium chamber 8 can be kept at 550°C, with the low temperature sodium being introduced into the second sodium chamber 10 as described above. Comparing this embodiment of the present invention with the former arrangement described above, it can be seen that the present invention can provide improved heat efficiency in the heat exchange system without suffering from any thermal striping as occurs in the prior art.

As the flow velocity distribution diagram of Fig. 4A shows, the sodium flows into the sodium chamber 10 from the central region of the reactor vessel 1, and flows out to the first wall cooling construction 11 at the outer peripheral side of the chamber 10. The temperature distribution is as indicated by isothermal lines in Fig. 4B. That is, the temperature is greatly reduced as a result of the sodium layer in the chamber 10, and the temperature is maintained at lower than 380°C on the upper surface of the core support 3.

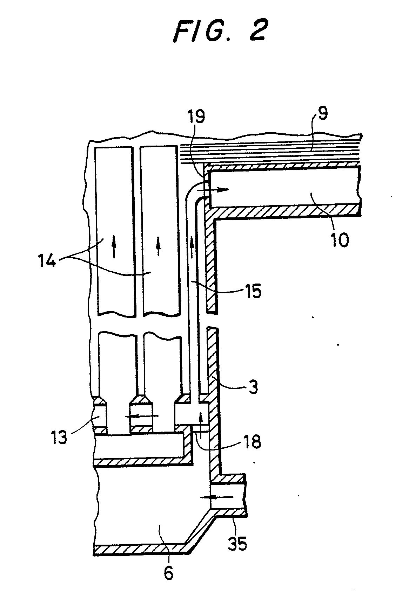

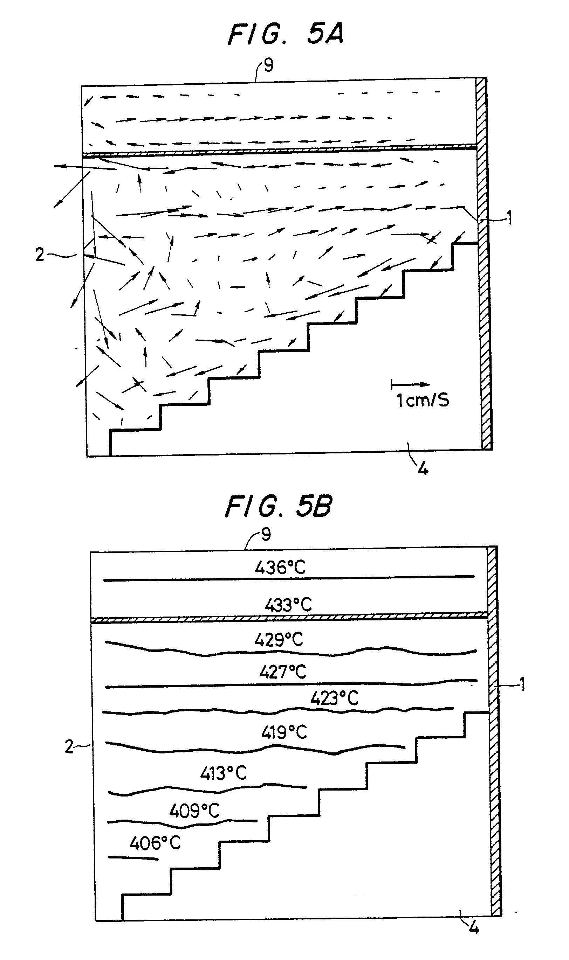

Fig. 5 is a diagram in which the first wall construction 11, the second wall cooling construction 12, the coupling pipes 15, the orifices 16, the convection-preventing boards 17, the blow-out tubes 20, the header 21 and the stagnant sodium layer 22 shown in Figs. 2, 3 and 4 are omitted.

As seen by comparing Fig. 4B and 5B, the present invention can achieve reduction of the temperature of the core support 3 by about 50°C compared with the structure shown in Fig. 5.

The sodium should most desirably be uniformly introduced into the first wall cooling construction 11 and the second wall cooling construction 12, in order to keep uniform the temperature in the circumferential direction of the reactor vessel 1 and of the pump wall 5. This can be accomplished by elevating the pressure in the sodium layer 10, and reducing the pressure of the sodium through the orifice 18.

To summarise, by the invention the temperature difference between the upper surface and the lower surface of the core support 3 can be reduced without causing any thermal striping of the reactor vessel 1. The sodium can be uniformly supplied to the reactor vessel wall and the pump wall to cool them. A fast breeder reactor according to the present invention may thus have the advantages of simplified construction, light weight, compact size, and increased reliability.

**Claims**

1. A fast breeder reactor comprising:
(a) a reactor vessel (1);
(b) a reactor core (2) disposed inside said vessel (1);
(c) a core support (3) supporting said core (1) and itself supported by the wall of said vessel (1);
(d) a first sodium chamber (4) formed in the lower portion of said reactor vessel (1) and below said core (2) to accommodate low temperature sodium;
(e) a second sodium chamber (10) located on a surface of said core support (3);
(f) a third sodium chamber (8) provided on said second sodium chamber (10) and said reactor core (2) to accommodate the high temperature sodium obtained when the low temperature sodium is passed from said first sodium chamber (4) to the third sodium chamber (8) through said reactor core and is heated thereby;
(g) a heat exchanger for cooling said high temperature sodium;
characterised by
means (15, 20, 21) for introducing said low temperature sodium in said first sodium chamber (4) into said second sodium chamber (10), and said low temperature sodium in said second sodium chamber (10) into said first sodium chamber (4), whereby the sodium is circulated to cool said core support (3);
and wherein said second sodium chamber (10) has in it at least one convection-preventing baffle (17) extending from said third sodium chamber (8) towards said first sodium chamber (4) in such a manner that the low temperature sodium in said second sodium chamber (10) flows under the lower end of said baffle (17) when so circulating.

2. A fast breeder reactor according to claim 1, wherein said third sodium chamber (8) has a first wall cooling arrangement (11) located at the inner periphery of said reactor vessel (1), and said low temperature sodium in said second sodium chamber (10) is passed into said first sodium chamber (4) via said first wall cooling arrangement (11).

3. A fast breeder reactor according to claim 1 or claim 2 wherein said introducing means (15, 20, 21) has pressure means (23) for maintaining said low temperature sodium in said second sodium chamber at elevated pressure and at least one orifice (18) is provided between said pressure means (23) and said second sodium chamber (10) to reduce the pressure of said low temperature sodium.

4. A fast breeder reactor according to claim 3 wherein said pressure means (23) has a second wall cooling arrangement (12) which surrounds said pressure means, and low temperature sodium in said second sodium chamber (10) is passed into said first sodium chamber (4) via said second wall cooling arrangement (12).

## Patentansprüche

1. Schnellbrüter-Kernreaktor, bestehend aus
a) einem Reaktorbehälter (1);
b) einem im Inneren des Behälters (1) angeordneten Reaktorkern (2);
c) einer den Kern (1) abstützenden Kernabstützung (3), die ihrerseits durch die Wand des Behälters (1) abgestützt ist;
d) einer ersten Schwefelkammer (4), die im unteren Bereich des Reaktorbehälters (1) und unter dem Kern (2) ausgebildet ist, um Niedertemperaturschwefel aufzunehmen;
e) einer zweiten Schwefelkammer (10), die auf einer Oberfläche der Kernabstützung (3) angeordnet ist;
f) einer dritten Schwefelkammer (8), die auf der zweiten Schwefelkammer (10) und dem Reaktorkern (2) angeordnet ist, um Hochtemperaturschwefel aufzunehmen, der erhalten wird, wenn der Niedertemperaturschwefel von der ersten Schwefelkammer (4) in die dritte Schwefelkammer (8) durch den Reaktorkern hindurch überführt und dabei erhitzt wird;
g) einem Wärmetauscher zum Kühlen des Hochtemperaturschwefels,
gekennzeichnet durch
Mittel (15, 20, 21) zum Überführen des in der ersten Schwefelkammer (4) enthaltenen Niedertemperaturschwefels in die zweite Schwefelkammer (10) und zum Überführen des in der zweiten Schwefelkammer (10) enthaltenen Niedertemperaturschwefels in die erste Schwefelkammer (4), wodurch der Schwefel zum Kühlen der Kernabstützung (3) umgewälzt wird;
und wobei die zweite Schwefelkammer (10) mindestens eine eine Konvektion verhindernde Prallplatte (17) aufweist, die sich von der dritten Schwefelkammer (8) derart zu der ersten Schwefelkammer (4) hin erstreckt, daß der in der zweiten Schwefelkammer (10) enthaltene Niederdruckschwefel bei dieser Umwälzung das untere Ende der Plattplatte (17) umströmt.

2. Schnellbrüter-Kernreaktor nach Anspruch 1, wobei die dritte Schwefelkammer (8) eine erste Wandkühlungsanordnung (11) aufweist, die nahe dem Innenumfange des Reaktorbehälters (1) angeordnet ist, und wobei der in der zweiten Schwefelkammer (10) enthaltene Niedertemperaturschwefel über die erste Wandkühlungsanordnung (11) in die erste Schwefelkammer (4) übergeleitet wird.

3. Schnellbrüter-Kernreaktor nach Anspruch 1 oder 2, wobei die Überführungsmittel (15, 20, 21) eine Druckeinrichtung (23) aufweisen, um den in der zweiten Schefelkammer (10) enthaltenen Niedertemperaturschwefel auf einem erhöhten Druck zu halten, und wobei mindestens eine Öffnung (18) zwischen der Druckeinrichtung (23) und der zweiten Schwefelkammer (10) angeordnet ist, um den Druck des Niedertemperaturschwefels zu verringern.

4. Schnellbrüter-Kernreaktor nach Anspruch 3, wobei die Druckeinrichtung (23) eine zweite Wandkühlungsanordnung (12) aufweist, die die Druckeinrichtung umgibt, und wobei der in der zweiten Schwefelkammer (10) enthaltene Niedertemperaturschwefel über die zweite Wandkühlungsanordnung (12) in die erste Schwefelkammer (4) übergeleitet wird.

## Revendications

1. Réacteur surrégénérateur rapide comprenant:
(a) un caisson (1);
(b) un coeur (2) disposé à l'intérieur du caisson (1);
(c) un support (3) du coeur, qui supporte ledit coeur (1) et est lui-même supporté par la paroi dudit caisson (1);
(d) une première chambre à sodium (4) formée dans la partie inférieure dudit caisson (1) du réacteur et au-dessous dudit coeur (2) de manière à loger le sodium à basse température;
(e) une seconde chambre à sodium (10) située sur une surface dudit support (3) du coeur;
(f) une troisième chambre à sodium (8) prévue sur ladite seconde chambre à sodium (10) et sur ledit coeur (2) du réacteur de manière à loger le sodium à haute température obtenu lorsque le sodium à basse température est transféré de ladite première chambre à sodium (4) dans la troisième chambre à sodium (8) en traversant ledit coeur du réacteur et est de ce fait chauffé;
(g) un échangeur de chaleur servant à refroidir ledit sodium à haute température
caractérisé par
— des moyens (15, 20, 21) servant à introduire ledit sodium à basse température situé dans ladite première chambre à sodium (4), dans ladite seconde chambre à sodium (10), et ledit sodium à basse température situé dans ladite seconde chambre à sodium (10) dans ladite première chambre à sodium (4), ce qui a pour effet que le sodium est entraîné en circulation de manière à refroidir ledit support (3) cu coeur; et
— dans lequel ladite seconde chambre à sodium (10) contient en elle au moins un déflecteur (17) empêchant la convection et qui s'étend depuis ladite troisième chambre à sodium (8) et en direction de ladite première chambre à sodium (4) de telle sorte que le sodium à basse température situé dans ladite seconde chambre à sodium (10) se déplace au-dessous de l'extrémité inférieure dudit déflecteur (17) lorsqu'il est ainsi en circulation.

2. Réacteur surrégénérateur rapide selon la revendication 1, dans lequel ladite troisième chambre à sodium (8) comporte un premier dispositif de refroidissement de paroi (11) situé sur le pourtour intérieur dudit caisson (1) du réacteur, et ledit sodium à basse température situé dans ladite seconde chambre à sodium (10) est transféré dans ladite première chambre à sodium (4) par l'intermédiaire dudit premier dispositif de refroidissement de paroi (11).

3. Réacteur surrégénérateur rapide selon la revendication 1 ou 2, dans lequel lesdits moyens d'introduction (15, 20, 21) comprennent des moyens de mise en pression (23) servant à maintenir ledit sodium à basse température situé dans ladite seconde chambre à sodium à une pression élevée, et il est prévu au moins un orifice (18) entre lesdits moyens de mise en pression (23) et ladite seconde chambre à sodium (10) pour réduire la pression dudit sodium à basse température.

4. Réacteur surrégénérateur rapide selon la revendication 3, dans lequel lesdits moyens de mise en pression (23) comportent un second dispositif de refroidissement de paroi (12), qui entoure lesdits moyens de mise en pression, et ledit sodium à basse température situé dans ladite seconde chambre à sodium (10) est transféré dans ladite première chambre à sodium (4) par l'intermédiaire dudit second dispositif de refroidissement de paroi (12).

# FIG. 1

# FIG. 2

# FIG. 3

## FIG. 4A

INLET

OUTLET

9   17

2

1

4

1.0 cm/S

## FIG. 4B

9   17

381.0°C

377°C

2

1

373°C   365.0°C

4

4

## FIG. 5A

## FIG. 5B